# EUROPÄISCHE PATENTSCHRIFT

(11) **EP 3 571 097 B1**
(45) Veröffentlichungstag und Bekanntmachung des Hinweises auf die Patenterteilung: **11.11.2020**
(21) Anmeldenummer: 17800857.9
(22) Anmeldetag: 20.11.2017
(51) Int. Cl.: B60R 21/272, B60R 21/264, B60R 21/274

(54) **HYBRIDGASGENERATOR, VERFAHREN ZUM BETREIBEN EINES HYBRIDGASGENERATORS, GASSACKMODUL UND FAHRZEUGSICHERHEITSSYSTEM**
HYBRID GAS GENERATOR, METHOD FOR OPERATING A HYBRID GAS GENERATOR, AIRBAG MODULE AND VEHICLE SAFETY SYSTEM
GÉNÉRATEUR DE GAZ HYBRIDE, PROCÉDÉ POUR FAIRE FONCTIONNER UN GÉNÉRATEUR DE GAZ HYBRIDE, MODULE DE COUSSIN GONFLABLE ET SYSTÈME DE SÉCURITÉ DE VÉHICULE

(30) Priorität: 18.01.2017 DE 102017100857
(43) Veröffentlichungstag der Anmeldung: 27.11.2019
(73) Patentinhaber: ZF Airbag Germany GmbH, 84544 Aschau a. Inn (DE)
(72) Erfinder: JUNG, Christian, 84453 Mühldorf am Inn (DE); BIERWIRTH, Sebastian, 83562 Rechtmehring (DE); EBNER, Johannes, 84453 Mühldorf am Inn (DE); NEUMAYER, Hans-Peter, 84539 Ampfing (DE); OBERSTARR, Martin, 84570 Polling (DE); HILLMANN, Daniel, 83555 Gars Bahnhof (DE); ISENMANN, Uta, 84478 Waldkraiburg (DE); LAST, Detlef, 84453 Mühldorf am Inn (DE)
(74) Vertreter: ZF Patentabteilung - DIPS
(86) Internationale Anmeldenummer: PCT/EP2017/079754
(87) Internationale Veröffentlichungsnummer: WO 2018/133977

(56) Entgegenhaltungen:
- EP-A1- 1 236 625
- EP-A1- 1 459 946
- FR-A1- 2 865 172
- JP-A- 2001 080 449

## Beschreibung

Die Erfindung betrifft einen Hybridgasgenerator, umfassend eine Druckgaskammer und eine Anzündeinheit, wobei die Druckgaskammer von einer ersten anzünderseitigen Berstmembran und einer zweiten Berstmembran verschlossen ist, gemäß dem Oberbegriff des Patentanspruches 1. Ferner betrifft die Erfindung ein Verfahren zum Betreiben eines Hybridgasgenerators. Des Weiteren betrifft die Erfindung ein Gassackmodul mit einem erfindungsgemäßen Hybridgasgenerator und ein Fahrzeugsicherheitssystem mit einem erfindungsgemäßen Hybridgasgenerator oder einem erfindungsgemäßen Gassackmodul.

Aus DE 203 19 564 U1 ist beispielsweise ein Gasgenerator mit einer Druckkammer bekannt. Die Druckkammer kann mit einem Druckgas aus Helium, einem Helium/Argon-Gemisch oder einem Helium/Argon/Sauerstoff-Gemisch bei einem Druck zwischen 240 bis 1.500 bar gefüllt sein. Auf die Druckgaskammerwand bzw. das Druckgaskammergehäuse wirken somit hohe Kräfte, so dass die Druckgaskammerwand entsprechend stabil ausgebildet ist bzw. eine große Materialdicke aufweisen muss.

Die EP1236625 A1 offenbart einen Hybridgasgenerator nach dem Oberbegriff von Anspruch 1.

Außerdem ist es bei bekannten Hybridgasgeneratoren notwendig, den Druckgasbehälter auf den im Funktionsfall maximalen Funktionsdruck auszulegen.

Die Aufgabe der Erfindung besteht darin, einen weiterentwickelten Hybridgasgenerator anzugeben, wobei die Druckgaskammer dünnwandiger ausgelegt werden kann. Insbesondere soll ein derartiger Hybridgasgenerator angegeben werden, dessen Funktionsdrücke niedrig gehalten werden können. Ferner ist es Aufgabe der Erfindung ein weiterentwickeltes Verfahren zum Betreiben eines Hybridgasgenerators anzugeben. Außerdem ist es Aufgabe der Erfindung ein Gassackmodul sowie ein Fahrzeugsicherheitssystem mit einem weiterentwickelten Hybridgasgenerator anzugeben.

Erfindungsgemäß wird diese Aufgabe im Hinblick auf einen Hybridgasgenerator durch den Gegenstand des Patentanspruches 1, im Hinblick auf eine Verfahren zum Betreiben eines Hybridgasgenerators durch den Gegenstand des Patentanspruches 7, im Hinblick auf ein Gassackmodul durch den Gegenstand des Patentanspruches 10 und im Hinblick auf ein Fahrzeugsicherheitssystem durch den Patentanspruch 11 gelöst.

Zur Lösung der eingangs genannten Aufgabe sieht die Erfindung einen Hybridgasgenerator, umfassend eine Druckgaskammer und eine Anzündeinheit vor, wobei die Druckgaskammer von einer ersten anzünderseitigen Berstmembran und einer zweiten Berstmembran verschlossen ist. Die zweite Berstmembran kann auch als diffusorseitige Berstmembran bezeichnet werden und ist vorzugsweise der ersten anzünderseitigen Berstmembran, bezüglich der längsaxialen Richtung des Hybridgasgenerators, gegenüber positioniert. Insbesondere dient eine geöffnete zweite Berstmembran zur Fluidverbindung zwischen der Druckgaskammer und einem Diffusor und/oder einem Filterpaket.

Erfindungsgemäß sind in dem Hybridgasgenerator ein erstes, schnell abbrennendes Pyrotechnik-Mittel und ein zweites, im Vergleich zum ersten Pyrotechnik-Mittel, langsam abbrennendes Pyrotechnik-Mittel befindlich. Die zweite Berstmembran ist durch in der Druckgaskammer erzeugbaren Überdruck öffenbar. Das erste Pyrotechnik-Mittel ist von dem zweiten Pyrotechnik-Mittel derart separiert, dass der Überdruck in der Druckgaskammer zur Öffnung der zweiten Berstmembran durch das erste Pyrotechnik-Mittel erzeugbar ist.

Das erste Pyrotechnik-Mittel kann auch als erste Pyrotechnik-Schüttung bezeichnet werden. Das erste Pyrotechnik-Mittel kann aus gepressten Tabletten und/oder Granulat und/oder extrudierten Körpern und/oder aus ringförmigen Mitteln bestehen. Das zweite Pyrotechnik-Mittel kann ebenfalls aus gepressten Tabletten und/oder Granulat und/oder extrudierten Körpern und/oder in Form von Ringen vorliegen.

In einer weiteren Ausführungsform ist es möglich, dass das erste und/oder das zweite Pyrotechnik-Mittel als Stapel von ringförmigen Formkörpern bzw. Segmenten von Ringen ausgebildet ist.

Bei dem ersten Pyrotechnik-Mittel kann es sich insbesondere um eine Anzündmischung bzw. ein Anzündmittel handeln, das schnell abbrennt. Das zweite Pyrotechnik-Mittel kann auch als Treibstoff bezeichnet werden, wobei das zweite Pyrotechnik-Mittel im Vergleich zum ersten Pyrotechnik-Mittel langsamer abbrennt.

Bei dem ersten Pyrotechnik-Mittel handelt es sich im Vergleich zum zweiten Pyrotechnik-Mittel um die schnellere Pyrotechnik. Das erste Pyrotechnik-Mittel hat somit eine höhere bzw. schnellere Gaserzeugungsrate. Die Gaserzeugungsrate der ersten Pyrotechnik kann beispielsweise über die Körnung, d.h. die Größe der Einzelkörper der einzelnen Pyrotechnik-Elemente und/oder aufgrund chemischer Parameter eingestellt werden.

Vorzugsweise ist das erste Pyrotechnik-Mittel näher an der Anzündeinheit, insbesondere näher am Anzünder der Anzündeinheit, angeordnet als das zweite Pyrotechnik-Mittel. Erfindungsgemäß wird das erste Pyrotechnik-Mittel zeitlich zuerst angezündet. In äußerst kurzer Zeit, vorzugsweise innerhalb von 3 Millisekunden, kann aufgrund des ersten Pyrotechnik-Mittels in der Druckgaskammer ein Überdruck entwickelt werden, der zur Öffnung der zweiten Berstmembran dient. Mit anderen Worten wird die zweite Berstmembran durch Bildung eines Überdrucks in der Druckgaskammer geöffnet. Erfindungsgemäß erfolgt die Öffnung der zweiten Berstmembran "unmittelbar", also nicht durch einen (bewegbaren) Öffnungsdorn und/oder nicht durch ein Projektil.

Bevor die zweite Berstmembran durch den in der Druckgaskammer aufgebauten Überdruck geöffnet ist, ist auch bereits, zumindest teilweise, das zweite Pyrotechnik-Mittel angezündet. Die Öffnung der zweiten Berstmembran erfolgt derart schnell, dass zum Zeitpunkt des Öffnens der zweiten Berstmembran noch nicht das gesamte zweite Pyrotechnik-Mittel bzw. noch nicht die gesamte zweite Pyrotechnik-Schüttung durchgezündet hat bzw. angezündet ist. Das bedeutet, dass der maximale Funktionsdruck in der Druckgaskammer geringer ist als im Vergleich zu einer bereits erfolgten kompletten Durchzündung des zweiten Pyrotechnik-Mittels. Aufgrund dessen kann die Wandung bzw. das Druckgaskammergehäuse der Druckgaskammer mit einer geringeren Wandstärke gebildet werden. Dies führt zum einen zu erheblichen Gewichtseinsparungen und zum anderen zu einer Kostenreduzierung.

Das erste Pyrotechnik-Mittel und das zweite Pyrotechnik-Mittel sind voneinander separiert. Mit anderen Worten sind die Pyrotechnik-Schüttungen nicht miteinander vermischt und berühren sich vorzugsweise nicht. Die beiden Pyrotechnik-Mittel befinden sich in unterschiedlichen Abschnitten und/oder unterschiedlichen Kammern des Hybridgasgenerators, insbesondere der Druckgaskammer.

Vorzugsweise sind das erste Pyrotechnik-Mittel und das zweite Pyrotechnik-Mittel in der Druckgaskammer aufgenommen. Es ist jedoch auch möglich, dass lediglich das zweite Pyrotechnik-Mittel in der Druckgaskammer aufgenommen und das erste Pyrotechnik-Mittel außerhalb der Druckgaskammer positioniert ist.

In einer Ausführungsform der Erfindung ist es möglich, dass das erste Pyrotechnik-Mittel in einem ersten anzündernahen Abschnitt eines zentralen Leitrohres befindlich ist. Das zweite Pyrotechnik-Mittel kann hingegen in einer Zwischenkammer befindlich sein. Die Zwischenkammer wird vorzugsweise zwischen einer Innenseite eines Druckgaskammergehäuses und dem zentralen Leitrohr gebildet.

Besonders bevorzugt erstreckt sich das Leitrohr mindestens von einem Bereich des ersten Berstelements bis zu einem Bereich des zweiten Berstelements bzw. im Wesentlichen bis an die nächstliegende Umgebung des zweiten Berstelements heran. Mit anderen Worten erstreckt sich das Leitrohr mindestens von dem ersten Berstelement bis unmittelbar vor das zweite Berstelement.

Das Leitrohr weist vorzugsweise ein längliches (kreis)zylindrisches Gehäuse auf. Die Länge des Leitrohrs kann mindestens der Hälfte der Gesamtlänge der Druckgaskammer, insbesondere mindestens 70 % der Gesamtlänge der Druckgaskammer, insbesondere mindestens 80 % der Gesamtlänge der Druckgaskammer, entsprechen. Bei dem ersten anzündernahen Abschnitt des Leitrohres kann es sich insbesondere um die anzünderseitig ersten 25 % des Leitrohres, insbesondere die ersten 20 % des Leitrohres, insbesondere die ersten 15 % des Leitrohres, insbesondere die ersten 10 % des Leitrohres, handeln.

Das zweite Pyrotechnik-Mittel ist vorzugsweise in der beschriebenen Zwischenkammer befindlich. Es ist möglich, dass das zweite Pyrotechnik-Mittel nicht nur radial sondern auch axial von dem ersten Pyrotechnik-Mittel separiert bzw. beabstandet ist. Hierzu kann in der, vorzugsweise ringförmig ausgebildeten, Zwischenkammer ein Füllkörper sein. Der Füllkörper ist insbesondere dem ersten anzündernahen Abschnitt des zentralen Leitrohres axial, in Richtung des Druckgaskammerausgangs, nachgelagert. Des Weiteren ist es möglich, dass der Füllkörper auf Höhe des ersten Berstelements oder auf Höhe des Anzünders ausgebildet ist. In diesem Fall ist das erste Pyrotechnik-Mittel radial von dem zweiten Pyrotechnik-Mittel umgeben, wobei zwischen dem ersten Pyrotechnik-Mittel und dem zweiten Pyrotechnik-Mittel die Wandung des Leitrohres ausgebildet ist.

Der erste Abschnitt des Leitrohres kann von einem Scheibenelement mit mindestens einem, vorzugsweise axial ausgebildeten, Gasdurchlass begrenzt sein, wobei im ersten Abschnitt des Leitrohres mindestens zwei radiale Ausströmöffnungen ausgebildet sind. Aufgrund der Ausbildung von radialen Ausströmöffnungen strömt in der Ruhestellung des Hybridgasgenerators, also zeitlich vor dessen Aktivierung, das in der Druckgaskammer befindliche gespeicherte Druckgas auch in das Leitrohr, insbesondere in den ersten anzündernahen Abschnitt des Leitrohres, sodass auch das ersten Pyrotechnik-Mittel von gespeichertem Druckgas umgeben ist. Das Leitrohr ist vorzugsweise in axialer Verlängerung zur Anzünderkammer, insbesondere zum Gehäuse der Anzünderkammer, ausgebildet.

Vorzugsweise ist der erste anzündernahe Abschnitt des zentralen Leitrohres zwischen der ersten Berstmembran und dem beschriebenen Scheibenelement ausgebildet. Insbesondere durch das Flächenverhältnis der Ausströmöffnungen zum Gasdurchlass des Scheibenelements kann das Strömungsverhalten des durch das erste Pyrotechnik-Mittel entzündbaren Gases bestimmbar sein. Aufgrund der radialen Ausströmöffnungen kann zumindest ein Teil des vom ersten Pyrotechnik-Mittel entzündeten Gases in die, vorzugsweise ringförmige, Zwischenkammer strömen. Aufgrund dessen kann das zweite Pyrotechnik-Mittel angezündet werden.

Ein weiterer Teil des durch das erste Pyrotechnik-Mittel entzündeten Gases strömt hingegen aus dem Gasdurchlass des Scheibenelements in den weiteren Abschnitt des zentralen Leitrohres. Aufgrund des beschriebenen Flächenverhältnisses kann die Menge der Anzündgase bzw. Anzündpartikel des ersten Pyrotechnik-Mittels eingestellt bzw. aufgeteilt werden. Mit anderen Worten ist einstellbar, wie viele bzw. welche Menge an Anzündgasen bzw. Anzündpartikel des ersten Pyrotechnik-Mittels zur unmittelbaren Überdruckerzeugung in der Druckgaskammer, und damit zur Öffnung der zweiten Berstmembran, verwendet werden und wie viele Anzündgase bzw. Anzündpartikel zum Anzünden des zweiten Pyrotechnik-Mittels verwendet werden.

Die Zwischenkammer kann entlang einer längsaxialen Richtung L des Hybridgasgenerators mittels einer Begrenzungsscheibe begrenzt sein. Des Weiteren ist es möglich, dass das Leitrohr in der Nähe eines Diffusors mindestens zwei Eintrittsöffnungen aufweist. Die Eintrittsöffnungen dienen zur Fluidverbindung der Zwischenkammer mit dem Innenbereich des Leitrohrs.

Die Begrenzungsscheibe kann auch als Sieb ausgebildet sein und kann im Ruhezustand des Hybridgasgenerators verschlossen, insbesondere mittels einer Metallfolie aus Stahl, Kupfer oder Aluminium verdämmt, sein.

Bei der Begrenzungsscheibe kann es sich insbesondere um eine Streckmetallscheibe handeln. Die Begrenzungsscheibe weist vorzugsweise eine Ringform auf und ist über das Leitrohr gestülpt. Die Begrenzungsscheibe verhindert, dass Treibstoff aus der Zwischenkammer in den Endabschnitt der Druckgaskammer gelangt.

Die Druckgaskammer kann mit einem Druckgas aus Helium, einem Helium/Argon-Gemisch oder einem Helium/Argon/Sauerstoff-Gemisch bei einem Druck zwischen 250 bis 1.500 bar im Ruhezustand des Hybridgasgenerators gefüllt sein.

Bei der Ausbildung einer (ringförmigen) Zwischenkammer wird das Treibstoffgas, also das Gas das nach Aktivierung des Hybridgasgenerators durch Entzündung des zweiten Pyrotechnik-Mittels entsteht, von radial außen, d.h. von der Zwischenkammer, nach radial innen, d.h. in das Leitrohr bzw. den Innenbereich des Leitrohrs (um)gelenkt. Abbrandpartikel und/oder Pyrotechnik-Elemente werden durch Ausbildung der Begrenzungsscheibe, insbesondere als Sieb, in der Zwischenkammer zurückgehalten.

In einer weiteren Ausführungsform der Erfindung kann das zweite Pyrotechnik-Mittel axial von dem ersten Pyrotechnik-Mittel separiert, insbesondere beabstandet, sein. Mit anderen Worten kann das zweite Pyrotechnik-Mittel dem ersten Pyrotechnik-Mittel axial nachgelagert ausgebildet sein. Zwischen dem ersten Pyrotechnik-Mittel und dem zweiten Pyrotechnik-Mittel kann des Weiteren ein Längsabstand ausgebildet sein.

Das erste Pyrotechnik-Mittel kann in einer anzündernahen Pyrotechnik-Kammer und das zweite Pyrotechnik-Mittel in einem als Brennkammer ausgebildeten Abschnitt der Druckgaskammer befindlich sein. Vorzugsweise ist die Brennkammer von der Pyrotechnik-Kammer beabstandet ausgebildet. In einer besonders bevorzugten Ausführungsform ist die Brennkammer durch ein federndes Element von der Pyrotechnik-Kammer beabstandet. Der anzünderseitige Beginn der Brennkammer kann durch einen Füllkörper gebildet sein, wobei der Füllkörper aufgrund einer Feder, die an der Pyrotechnik-Kammer anliegt, insbesondere im Ruhezustand des Hybridgasgenerators, von der Pyrotechnik-Kammer weggedrückt wird. Am diffusorseitigen Ende der Brennkammer ist vorzugsweise ein Brennkammersieb oder eine Begrenzungsscheibe ausgebildet. Auf der brennkammerseitigen Innenfläche des Brennkammersiebs oder der Begrenzungsscheibe kann eine Verdämmung, beispielsweise in Form einer Metallscheibe bzw. Metallfolie aus Kupfer, Aluminium oder Stahl, ausgebildet sein.

Das Treibstoffgas, das auch als Treibstoffabbrandgas bezeichnet werden kann und bei bzw. nach einem Abbrand der beiden Pyrotechnik-Mittel, insbesondere des zweiten langsam abbrennenden Pyrotechnik-Mittels gebildet wird, dient beispielsweise zur Füllung eines Luftsacks, insbesondere eines Airbags.

Insgesamt muss die Außenwandung bzw. das Druckgaskammergehäuse des Hybridgasgenerators für die Erzeugung einer maximalen Gaserzeugungsrate der Pyrotechnik-Mittel, insbesondere des zweiten langsam abbrennenden Pyrotechnik-Mittels, dimensioniert werden. Es sind keine Aufdickungen oder Durchmesserreduzierungen oder Rollierungen notwendig. Des Weiteren ist kein hochaufgeladenes vorgefertigter Anzünder notwendig. Vielmehr lässt sich ein günstiger Standardanzünder verwenden, welcher ein ihm nachgelagertes erstes Pyrotechnik-Mittel entzünden kann.

Ein weiterer Aspekt der Erfindung betrifft ein Verfahren zum Betreiben eines erfindungsgemäßen Hybridgasgenerators. Das erfindungsgemäße Verfahren ist durch die folgenden Verfahrensschritte gekennzeichnet:
a) Aktivieren eines Anzündeinheit des Hybridgasgenerators;
b) Entzünden des ersten Pyrotechnik-Mittels;
c) Aufbauen eines Überdrucks in der Druckgaskammer;
d) Entzünden des zweiten Pyrotechnik-Mittels und teilweises Erzeugen eines Treibstoffgases;
e) Öffnen des zweiten Berstelements aufgrund des aufgebauten Überdrucks;
f) Erzeugen weiteren Treibstoffgases durch das zweite Pyrotechnik-Mittel;
g) Ausströmen des weiteren Treibstoffgases durch das geöffnete zweite Berstelement.

Vorzugsweise wird das erfindungsgemäße Verfahren in der angegebenen Reihenfolge durchgeführt. Erfindungsgemäß kann das zweite Pyrotechnik-Mittel zeitversetzt von dem sich in der Druckgaskammer aufgebauten Überdruck abbrennen. Zum Öffnen des zweiten Berstelements dient lediglich oder zumindestens größtenteils der in der Druckgaskammer erzeugte Überdruck, welcher vorzugsweise hauptsächlich durch das Entzünden des ersten Pyrotechnik-Mittels gebildet wird. Das weitere erzeugte Treibstoffgas dient hingegen zur Füllung eines Luftsacks, insbesondere eines Airbags.

Das erste Pyrotechnik-Mittel wirkt als Anzündverstärker für das zweite Pyrotechnik-Mittel und als Überdruck-Erzeuger. Der zum Öffnen des zweiten Berstelements notwendige Überdruck wird zeitlich vor dem Erreichen der maximalen Gaserzeugungsrate des zweiten Pyrotechnik-Mittels erzeugt.

Die maximale Gaserzeugungsrate des zweiten Pyrotechnik-Mittels bzw. des Treibstoffs erfolgt zeitlich nachgelagert zu Schritt e). Mit anderen Worten erreicht der Treibstoff des zweiten Pyrotechnik-Mittels seine maximale Gaserzeugungsrate erst nachdem die Druckgaskammer geöffnet ist, d.h. erst nachdem das zweite Berstelement geöffnet ist. Aufgrund dessen werden die Funktionsdrücke im Hybridgasgenerator niedrig gehalten. Des Weiteren wird die Gaserzeugung bzw. Gasförderung verlängert und über einen längeren Zeitraum stabil gehalten. Die Gassack-Standzeit bzw. Airbag-Standzeit wird somit in positiver Art und Weise erhöht. Durch das Erreichen der maximalen Gaserzeugungsrate nach dem Öffnen des zweiten Berstelements wird ein geregeltes Nachliefern von Treibstoffgas bewirkt.

Vorzugsweise wird ein Bersten des ersten Berstelements zeitlich nachgelagert zu Schritt a) oder b) durchgeführt. Dies bedeutet, dass ein Bersten bzw. Öffnen des ersten Berstelements direkt nach dem Aktivieren der Anzündeinheit vorgesehen sein kann, bevor das erste Pyrotechnik-Mittel entzündet wird, vorzugsweise bei einem Design des Hybridgasgenerators, bei dem sich das erste und das zweite Pyrotechnik-Mittel innerhalb der Druckgaskammer befinden. Jedoch kann auch erst nach Entzündung des ersten Pyrotechnik-Mittels ein solches Öffnen des ersten Berstelements durchgeführt werden, vorzugsweise, wenn sich das erste Pyrotechnik-Mittel außerhalb der Druckgaskammer befindet.

Aufgrund des einstellbaren Flächenverhältnisses der Ausströmöffnungen im ersten Abschnitt des Leitrohrs zum Gasdurchlass des Scheibenelements kann der Hybridgasgenerator auf unterschiedlich ausgebildete zweite Pyrotechnik-Mittel, d.h. auf unterschiedlich anzündbare Haupttreibstoffe, eingestellt werden, welche sich beispielsweise in Form, Größe oder chemischer Zusammensetzung unterscheiden können.

Sofern im Endabschnitt der Druckgaskammer ein Sieb ausgebildet ist, strömt das Treibstoff(Abbrand)-Gas durch dieses Sieb in einen Diffusor.

Ein weiterer nebengeordneter Aspekt der Erfindung betrifft ein Gassackmodul mit einem erfindungsgemäßen Hybridgasgenerator. Es ergeben sich ähnliche Vorteile wie diese bereits im Zusammenhang mit dem erfindungsgemäßen Hybridgasgenerator und/oder mit dem erfindungsgemäßen Verfahren zum Betreiben eines Hybridgasgenerators angegeben sind.

Ein weiterer nebengeordneter Aspekt der Erfindung betrifft ein Fahrzeugsicherheitssystem , insbesondere ein Airbagsystem, mit einem erfindungsgemäßen Hybridgasgenerator oder mit einem erfindungsgemäßen Gassackmodul. Es ergeben sich ähnliche Vorteile, wie diese bereits im Zusammenhang mit dem erfindungsgemäßen Hybridgasgenerator und/oder mit dem erfindungsgemäßen Verfahren zum Betreiben eines Hybridgasgenerators angegeben sind.

Die Erfindung wird im Folgenden anhand von Ausführungsbeispielen unter Bezugnahme auf die beigefügten, schematischen Zeichnungen näher erläutert.

Darin zeigen:
Fig. 1 einen erfindungsgemäßen Hybridgasgenerator gemäß einem ersten Ausführungsbeispiel;
Fig. 2 einen erfindungsgemäßen Hybridgasgenerator gemäß einem zweiten Ausführungsbeispiel; und
Fig. 3 einen erfindungsgemäßen Hybridgasgenerator gemäß einem dritten Ausführungsbeispiel.

Im Folgenden werden für gleiche und gleichwirkende Teile dieselben Bezugsziffern verwendet.

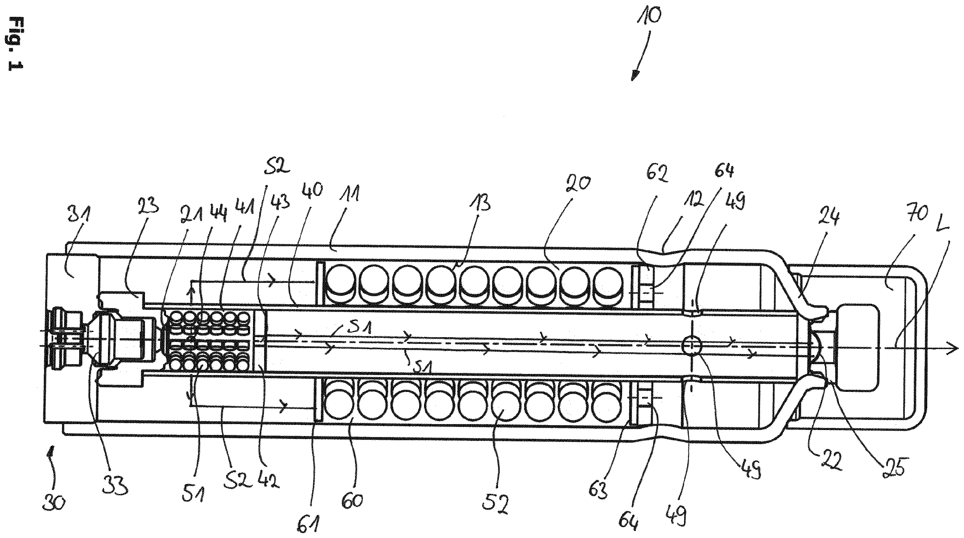

Der in Fig. 1 dargestellte Hybridgasgenerator 10 umfasst ein langgestrecktes rohrförmiges Außengehäuse, welches als Druckgaskammergehäuse 11 ausgebildet ist. Der Hybridgasgenerator 10 dient insbesondere zum Aufblasen eines Gassacks, insbesondere eines Airbags (nicht dargestellt), wobei er aber auch ein Aktuatorelement, insbesondere ein Motorhaubenaufsteller, Gurtstraffer oder Überrollschutzelement bei einem Fahrzeug, umfassen kann. Der Hybridgasgenerator 10 umfasst eine zentrale, langgetreckte, zylindrische Druckgaskammer 20 sowie eine Anzündeinheit 30, welche einen Anzünder 33 aufweist. Die Druckgaskammer 20 ist von einer ersten anzünderseitigen Berstmembran 21 und einer zweiten Berstmembran 22 verschlossen. Die zweite Berstmembran ist gassackseitig bzw. diffusorseitig positioniert, das heißt, sie ist an einem Bereich des Hybridgasgenerators 10 angebracht, in dessen Umgebung sich ein nicht dargestellter Gassack bzw. ein Diffusor 70 befindet.

Die Druckgaskammer 20 ist im Ruhezustand des Hybridgasgenerators 10, also vor dessen Aktivierung, mit einem Druckgas aus Helium, einem Helium/Argon-Gemisch oder einem Helium/Argon/Sauerstoff-Gemisch bei einem Druck zwischen 240 bis 1.500 bar gefüllt. Die Anzündeinheit 30 umfasst einen Sockel 31, der als Träger des Anzünders 33 dient.

An der Anzündeinheit 30 ist ein erster Berstelementhalter 23 angebracht, der zur Befestigung des ersten Berstelements 21 dient. Auch das zweite Berstelement 22 wird mittels eines zweiten Berstelementhalters 25 im Gehäuse der Druckgaskammer 20 befestigt.

In der Druckgaskammer 20 ist ein erstes, schnell abbrennendes Pyrotechnik-Mittel 51 und ein zweites, im Vergleich zum ersten Pyrotechnik-Mittel 51, langsam abbrennendes Pyrotechnik-Mittel 52 befindlich. Die zweite Berstmembran 22 ist durch einen in der Druckgaskammer 20 erzeugten Überdruck nach Aktivierung des Hybridgasgenerators 10 bzw. der Anzündeinheit 30 öffenbar. Das erste Pyrotechnik-Mittel 51 ist von dem zweiten Pyrotechnik-Mittel 52 derart separiert, dass der Überdruck in der Druckgaskammer 20 zur Öffnung der zweiten Berstmembran 22 durch das erste Pyrotechnik-Mittel 51, konkret durch einen Abbrand des ersten Pyrotechnik-Mittels 51 mit entsprechender Druckentwicklung, erzeugbar ist.

In der Druckgaskammer 20 ist ein Leitrohr 40 ausgebildet. Das Leitrohr 40 weist eine zylindrische Form auf. Das Leitrohr 40 weist eine derartige Länge auf, wobei als Länge des Leitrohrs 40 die Erstreckung in Richtung der längsaxialen Richtung L des Hybridgasgenerators 10 zu verstehen ist, die in etwa 90 % der Gesamtlänge der Druckgaskammer 20 des Hybridgasgenerators 10 entspricht. Das Leitrohr 40 erstreckt sich im Wesentlichen vom ersten Berstelement 21 bis in etwa zum zweiten Berstelement 22. Insbesondere erstreckt sich das Leitrohr 40 bis zu einem Bereich der Druckgaskammer 20, der in eine endseitige Verjüngung 24 übergeht. Das heißt, dass das Leitrohr 40 im dargestellten Beispiel nicht vollständig, in axialer Länge betrachtet, bis zum zweiten Berstelement 22 heranreicht. Das Leitrohr 40 liegt auf einem Innenabschnitt der Verjüngung 24 auf.

Das erste Pyrotechnik-Mittel 51 kann als Granulat und/oder als gepresste Tabletten, Ringkörper und/oder als Extrudat-Körper mit mindestens einem, insbesondere axialem, Durchgangskanal und/oder als Extrudat-Körper ohne axialen Durchgangskanal ausgebildet sein. Das erste Pyrotechnik-Mittel 51 ist in einem ersten anzündernahen Abschnitt 41 des Leitrohrs 40 befindlich.

Der erste Abschnitt 41 wird in axialer Richtung, d.h. in Richtung der längsaxialen Richtung L des Hybridgasgenerators 10 von einem Scheibenelement 42 begrenzt. Das Scheibenelement 42 weist einen mittigen achsialen Gasdurchlass 43 auf. Außerdem sind im ersten Abschnitt 41 des Leitrohrs 40 mindestens zwei radiale Ausströmöffnungen 44 ausgebildet. Das heißt, dass das erste Pyrotechnik-Mittel 51, das sich im ersten Abschnitt 41 des Leitrohrs 40 befindet von Druckgas der Druckgaskammer 20 umgeben ist.

Das zweite Pyrotechnik-Mittel 52 ist hingegen in einer Zwischenkammer 60 befindlich. Die Zwischenkammer 60 wird an ihrem ersten anzünderseitigen Ende von einem Füllkörper 61 begrenzt. Der Füllkörper 61 ist gas- bzw. fluiddurchlässig ausgebildet. Das zweite, diffusorseitige Ende der Zwischenkammer 60 wird von einer Begrenzungsscheibe 62 gebildet. Die Begrenzungsscheibe 62 weist mehrere axiale Durchgangsöffnungen, welche als Zwischenkammerauslässe 64 ausgebildet sind, auf, wobei auf der zur Zwischenkammer 60 weisenden Seite der Begrenzungsscheibe 62 eine Verdämmung 63 aufgebracht ist, welche beispielsweise aus einer aufklebbaren gasundurchlässigen Metallfolie, z.B. aus Kupfer, Stahl oder Aluminium, gebildet ist. Demnach können die Zwischenkammerauslässe 64 im nichtaktivierten Zustand des Hybridgasgenerators 10 verschlossen sein.

Die Begrenzungsscheibe 62 verhindert im nichtaktivierten Zustand des Hybridgasgenerators 10, dass das zweite Pyrotechnik-Mittel 52 aus der Zwischenkammer 60 austritt. Die Begrenzungsscheibe 62 liegt insbesondere auf einer im Druckgaskammergehäuse 11 umlaufend ausgebildeten Sicke 12 auf. Die Zwischenkammer 60 ist insbesondere zwischen der Innenseite 13 des Druckgaskammergehäuses 11 und dem zentralen Leitrohr 40 gebildet. Im vorliegenden Fall entspricht das Druckgaskammergehäuse 11 einem Außengehäuse des Hybridgasgenerators 10.

Im dargestellten Beispiel liegt das zweite Pyrotechnik-Mittel 52 in Form von gepressten Tabletten vor. Es ist auch möglich, dass das zweite Pyrotechnik-Mittel 52 in anderen geometrischen Formen, wie z.B. in Form von aneinandergestapelten Ringen bzw. als gestapelte Treibstoffringe vorliegt, wobei auch Treibstoffsegmente, insbesondere als Teilabschnitte eines Rings so aneinandergereiht vorliegen können, dass sie insgesamt eine ringförmige Form aufweisen. Des Weiteren kann das zweite Pyrotechnik-Mittel 52 in gängigen Formen wie z.B. als Granulat und/oder Extrudat-Körper mit einem oder mehreren Durchgangskanälen und/oder Extrudat-Körper ohne Durchgangskanal vorliegen.

Im dargestellten Beispiel ist die Zwischenkammer 60 dem ersten Abschnitt 41 des Leitrohrs 40 axial nachgelagert. Es ist auch möglich, dass die mit dem zweiten Pyrotechnik-Mitel 52 befüllte Zwischenkammer 60 den ersten Abschnitt 41 des Leitrohrs 40 umgibt.

Die radialen Ausströmöffnungen 44 in dem Leitrohr 40 bilden eine Fluidverbindung vom ersten Abschnitt 41 des Leitrohrs 40 zur Zwischenkammer 60. Aufgrund des Flächenverhältnisses der Ausströmöffnungen 44 zum Gasdurchlass 43 des Scheibenelements 42 kann das Strömungsverhalten des durch das erste Pyrotechnik-Mittel 51 entzündeten Gases bestimmt werden.

Das heiße Gas und die Partikel, die beim Abbrand des ersten Pyrotechnik-Mittels 51 entstehen werden demnach aufgeteilt. Ein erster Teil, nämlich der größere Anteil, entweicht über den Gasdurchlass 43 in einer Strömungsrichtung S1, die im Wesentlichen in Richtung der längsaxialen Richtung L des Hybridgasgenerators 10 verläuft, in den Innnenbereich des Leitrohrs 40. Mit Hilfe des ersten Pyrotechnik-Mittels wird somit ein Überdruck im Innenbereich des Leitrohrs 40 und auch in der Druckgaskammer 20 erzeugt, so dass die zweite Berstmembran 22 geöffnet wird.

Ein weiterer Anteil des Gases und der Partikel, die beim Abbrand des ersten Pyrotechnik-Mittels 51 entstehen, strömen entlang eines Strömungswegs bzw. entlang eienr Strömungsrichtung S2 über die radialen Ausströmöffnungen 44 des Leitrohrs 40 in Richtung des zweiten Pyrotechnik-Mittels 52, wobei der gas- bzw. partikeldurchlässige Füllkörper 61 durchströmt wird, um dieses zu entzünden. Hierbei verlässt der weitere Anteil des Gases und der Partikel den Innenbereich des Leitrohrs 40 zunächst in radialer Richtung über die Ausströmöffnungen 44, um danach in eine axiale Richtung, hin zu dem zweiten Pyrotechnik-Mittel 52, weiter zu strömen. Das erste Pyrotechnik-Mittel 51 wirkt somit sowohl als Anzündverstärker für das zweite Pyrotechnik-Mittel 52 als auch als Überdruck-Erzeuger zum Öffnen der zweiten Berstmebran 22, wie zuvor bereits beschrieben.

Der zum Öffnen des zweiten Berstelements 22 notwendige Überdruck wird zeitlich vor dem Erreichen der maximalen Gaserzeugungsrate des zweiten Pyrotechnik-Mittels 52 erzeugt. Demnach wird die Druckgaskammer 20 bzw. das zweite Berstelement 22 derart schnell geöffnet, dass das zweite Pyrotechnik-Mittel 52 noch nicht komplett durchgezündet ist und dessen maximale Gaserzeugungsrate noch nicht erreicht wurde. Als Folge davon sind die maximalen Funktionsdrücke in dem Hybridgasgenerator 10, insbesondere in der Druckgaskammer 20, geringer als in standardmäßigen Hybridgasgeneratoren, welche durch das Prinzip einer Überdrucköffnung ohne Schockwellenanteil funktionieren. Der erfindungsgemäße Hybridgasgenerator stellt somit eine Verbesserung für Hybridgasgeneratoren dar, welche mit einer verhältnismäßig langsame Überdrucköffnung arbeiten, ohne eine unterstützende verhältnismäßig sehr schnelle Ausbreitung einer Schockwelle für die Öffnung des zweiten Berstelements 22 zu benötigen. Aufgrund der beiden Pyrotechnik-Mittel 51 und 52 wird auch ein Hybridgasgenerator 10 mit einer zweistufigen pyrotechnischen Ladung bereitgestellt. Die Gaserzeugung wird aufgrund des zeitlich nachgelagerten Erreichens der maximalen Gaserzeugungsrate des zweiten Pyrotechnik-Mittels 52 verlängert bzw. über einen längeren Zeitraum stabil gehalten. Es wird somit ein quasi geregeltes Nachliefern von Treibstoffgas zur Verfügung gestellt, wobei beispielsweise Gassack-Standzeiten erhöht werden können.

Im Funktionsfall des Hybridgasgenerators 10 wird in der Zwischenkammer 60 aufgrund des entzündeten zweiten Pyrotechnik-Mittels 52 das genannte Treibstoffgas erzeugt. Das Treibstoffgas strömt nach dem Öffnen der Verdämmung 63 per Überdruck durch die Zwischenkammerauslässe 64 der Begrenzungsscheibe 62 in Richtung radialer Eintrittsöffnungen 49 des Leitrohrs 40. Die radialen Eintrittsöffnungen 49 dienen zur Fluidverbindung der Zwischenkammer 60 mit dem Innenbereich des Leitrohrs 40. Anschließend gelangt das Treibstoffgas durch das geöffnete zweite Berstelement 22 in den Diffusor 70. Durch Öffnungen des Diffusors 70 strömt das erzeugte Treibstoffgas und das gespeicherte Druckgas aus dem Hybridgasgenerator 10.

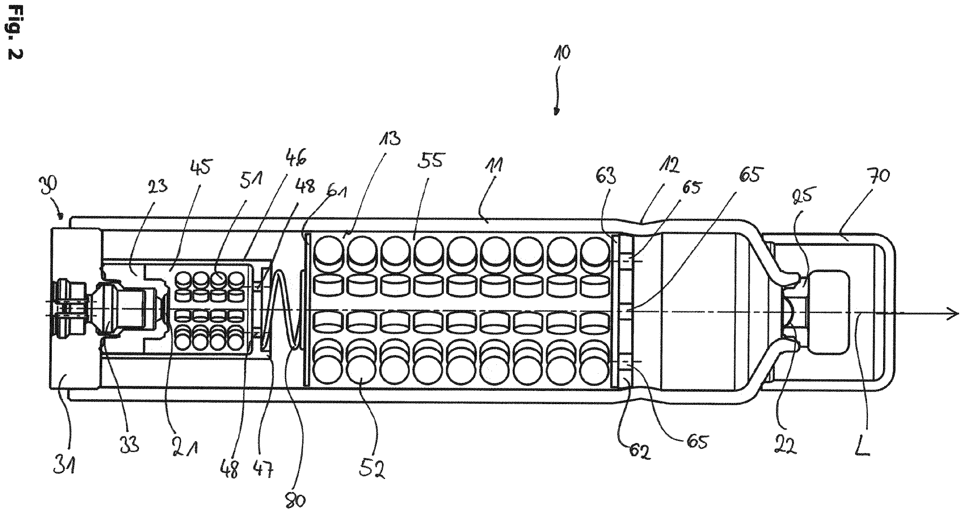

In Fig. 2 ist eine zweite Ausführungsform eines erfindungsgemäßen Hybridgasgenerators 10 dargestellt, der nach dem gleichen Grundprinzip des Hybridgasgenerators 10 der Fig. 1 wirkt. Das heißt, dass auch im Hybridgasgenerator 10 eine Druckgaskammer 20 ausgebildet ist, in der ein erstes, schnell abbrennendes Pyrotechnik-Mittel 51 und ein zweites, langsam abbrennendes Pyrotechnik-Mittel 52 befindlich sind. Die zweite Berstmembran 22 der Druckgaskammer 20 wird durch in der Druckgaskammer 20 erzeugbaren Überdruck geöffnet, wobei dieser Überdruck hauptsächlich durch das erste Pyrotechnik-Mittel 51 erzeugt wird.

Das erste Pyrotechnik-Mittel 51 befindet sich in einer anzündernahen Pyrotechnik-Kammer 45. Das zweite Pyrotechnik-Mittel 52 ist axial von dem ersten Pyrotechnik-Mittel 51 separiert. Das zweite Pyrotechnik-Mittel 52 ist in einem als Brennkammer 55 ausgebildeten Abschnitt der Druckgaskammer 20 befindlich. Die Brennkammer 55 wird anzünderseitig von einem Füllkörper 61, welcher in axialer Richtung von Gas bzw. Partikel durchströmbar ist begrenzt. Diffusorseitig ist die Brennkammer 55, die der Zwischenkammer 60 der Fig. 1 entspricht, von einer Begrenzungsscheibe 62 begrenzt. Die Begrenzungsscheibe 62 weist Brennkammerauslässe 65 auf. Auf der zur Brennkammer 55 weisenden Seite der Begrenzungsscheibe 62 ist des Weiteren eine Verdämmung 63 ausgebildet.

Das Gehäuse 46 der Pyrotechnik-Kammer 45 weist ein absatzartiges Element 47 auf. Ebenfalls ausgebildet sind axiale Kammer-Ausströmöffnungen 48.

Auch im Ausführungsbeispiel der Fig. 2 sind im Ruhezustand des Hybridgasgenerators 10 sowohl das erste Pyrotechnik-Mittel 51 als auch das zweite Pyrotechnik-Mittel 52 vom gespeicherten Druckgas der Druckgaskammer 20 umgeben.

Des Weiteren ist zu erkennen, dass die Brennkammer 55, insbesondere der Füllkörper 61 durch eine Feder 80 von der Pyrotechnik-Kammer 45 beabstandet ist. Die Feder 80 liegt in dem absatzartigen Element 47 des Gehäuses 46 auf.

Im Ausführungsbeispiel der Fig. 2 wird nach einer Aktivierung des Hybridgasgenerators 10 bzw. der Anzündeinheit 30 durch eine Erzeugung von Druck, Energie und/oder heißer Partikel durch den Anzünder 33 das erste Berstelement 21 und damit auch die Druckgaskammer 20 von außen her geöffnet. Unmittelbar wird danach das erste Pyrotechnik-Mittel 51 angezündet und abgebrannt, wodurch heiße Abbrandgase bzw. Partikel durch die Kammer-Ausströmöffnungen 48 aus der Pyrotechnik-Kammer 45 austreten und hauptsächlich in axialer Richtung den Füllkörper 61 und die Feder 80 durchströmen bzw. an diesen Bauteilen entlang strömen, um in die Brennkammer 55 zu gelangen. Das Abbrandgas des ersten Pyrotechnik-Mittels 51 bzw. die dadurch entstehende Überdruckentwicklung pflanzt sich unmittelbar durch die Brennkammer 55 hindurch fort, die Verdämmung 63 öffnend und die Brennkammerauslässe 65 durchströmend, bis hin zu dem zweiten Berstelement 22, welches sodann geöffnet wird.

Zusätzlich zünden die heißen Abbrandgase bzw. Partikel des ersten Pyrotechnik-Mittels 51 beim Eintritt in die Brennkammer 55 auch das zweite Pyrotechnik-Mittel 52 an, vorzugsweise unmittelbar bevor das zweite Berstelement 22 geöffnet wird. Dadurch ergeben sich analog die Vorteile, wie bereits zu Figur 1 beschrieben. Beispielsweise wird die Gaserzeugung aufgrund des zeitlich nachgelagerten Erreichens einer maximalen Gaserzeugungsrate des zweiten Pyrotechnik-Mittels 52 verlängert bzw. über einen längeren Zeitraum stabil gehalten.

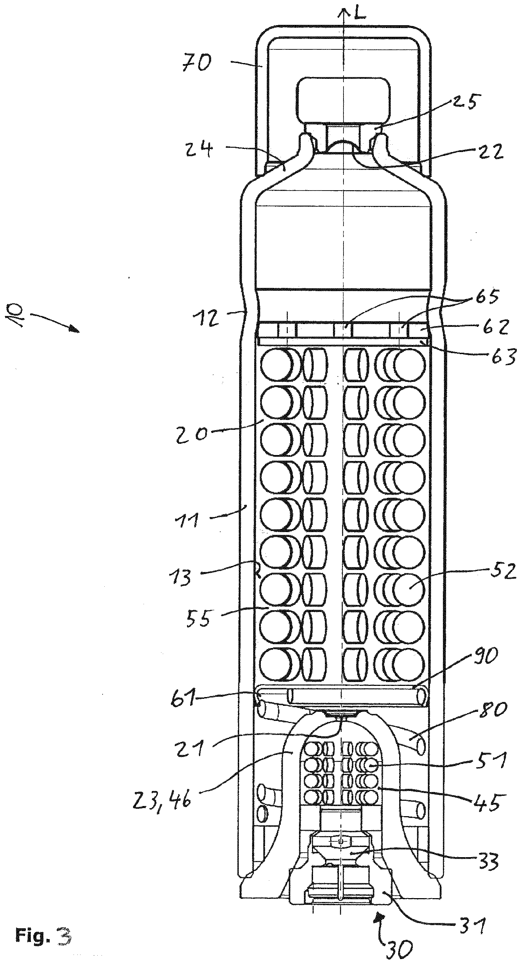

In Fig. 3 ist eine dritte Ausführungsform eines erfindungsgemäßen Hybridgasgenerators 10 dargestellt, welche nach dem gleichen Grundprinzip des Hybridgasgenerators 10 der Fig. 1 und 2 arbeitet. Das heißt, dass auch in Figur 3 im Hybridgasgenerator 10 ein erstes, schnell abbrennendes Pyrotechnik-Mittel 51 und ein zweites, langsam abbrennendes Pyrotechnik-Mittel 52 befindlich ist. Die zweite Berstmembran 22 der Druckgaskammer 20 wird durch in der Druckgaskammer 20 erzeugbaren Überdruck geöffnet, wobei dieser Überdruck hauptsächlich durch das erste Pyrotechnik-Mittel 51 erzeugt wird.

Diese dritte Ausführungsform ist ähnlich der zweiten Ausführungsform aus Fig. 2 aufgebaut, weist jedoch einige Unterschiede auf, wobei im Folgenden auf die wichtigsten eingegangen werden soll.

Wie in Figur 3 dargestellt, ist bei der dritten Ausführungsform das erste Pyrotechnik-Mittel 51 außerhalb der Druckgaskammer 20 in einer Kammer 45 untergebracht. Die Kammer 45 steht also im nichtaktivierten Zustand des Hybridgasgenerators 10 lediglich unter atmosphärischen Umgebungsdruck des Hybridgasgenerators 10. Umgeben bzw. teilweise umgrenzt wird die Kammer 45 von einem Gehäuse 46, welches zugleich auch als erster Berstmembranhalter 23 dient bzw. ausgebildet ist. Die Kammer 45 wird somit in axialer Richtung von dem ersten Berstelement 21 begrenzt.Umgeben wird die Kammer 45 bzw. der erste Berstmembranhalter 23 von einem Füllkörper 61, welcher eine Feder 80 und einen axialen Abschluss in Form einer von Gas und Partikeln durchströmbaren Platte 90 aufweist, welche mit der Feder vorzugsweise fest verbunden ist. Die Platte 90 kann ein Lochblech sein, welches, vorgespannt durch die Feder 80, axial gegen das zweite Pyrotechnik-Mittel 52 drückt, um bei der Herstellung des Hybridgasgenerators 10 und in dessen nichtaktivierten Zustand einen Volumenausgleich bezüglich des Füllstands für das zweite Pyrotechnik-Mittel 52 zu bilden.

Der bestimmungsgemäße Funktionsfall für das dritte Ausführungsbeispiel ist dem der Fig. 2 ähnlich. Jedoch wird hier nach einer Aktivierung des Hybridgasgenerators 10 bzw. der Anzündeinheit 30 zusätzlich noch das erste Pyrotechnik-Mittel 51, außerhalb der Druckgaskammer 20, mit angezündet, bevor durch Abbrandgase bzw. Partikel der Anzündeinheit 30 und des ersten Pyrotechnik-Mittels 51 das erste Berstelement 21 und damit auch die Druckgaskammer 20 von außen her geöffnet werden kann.

Nach einem Einströmen der Abbrandgase bzw. Partikel durch das geöffnete erste Berstelement 21 in die Druckgaskammer 20 bzw. Brennkammer 55 pflanzt sich der dadurch entstehende Überdruck unmittelbar durch die Brennkammer 55 hindurch fort, die Verdämmung 63 öffnend und die Brennkammerauslässe 65 durchströmend, bis hin zu dem zweiten Berstelement 22, welches sodann geöffnet wird.

### Bezugszeichenliste

- 10: Hybridgasgenerator
- 11: Druckgaskammergehäuse
- 12: Sicke
- 13: Innenseite
- 20: Druckgaskammer
- 21: Erstes Berstelement
- 22: Zweites Berstelement
- 23: Erster Berstelementhalter
- 24: Verjüngung
- 25: Zweiter Berstelementhalter
- 30: Anzündeinheit
- 31: Sockel
- 33: Anzünder
- 40: Leitrohr
- 41: Erster Abschnitt
- 42: Scheibenelement
- 43: Gasdurchlass
- 44: Radiale Ausströmöffnung
- 45: Pyrotechnik-Kammer
- 46: Gehäuse
- 47: Absatzartiges Element
- 48: Kammer-Ausströmöffnung
- 49: Eintrittsöffnung Leitrohr
- 51: Erstes Pyrotechnik-Mittel
- 52: Zweites Pyrotechnik-Mittel
- 55: Brennkammer
- 60: Zwischenkammer
- 61: Füllkörper
- 62: Begrenzungsscheibe
- 63: Verdämmung
- 64: Zwischenkammerauslass
- 65: Brennkammerauslass
- 70: Diffusor
- 80: Feder
- 90: Platte
- L: Längsaxiale Richtung Hybridgasgenerator
- S1: Strömungsrichtung
- S2: Strömungsrichtung

## Patentansprüche

1. Hybridgasgenerator (10), umfassend eine Druckgaskammer (20) und eine Anzündeinheit (30), wobei die Druckgaskammer (20) von einer ersten anzünderseitigen Berstmembran (21) und einer zweiten Berstmembran (22) verschlossen ist, wobei in dem Hybridgasgenerator (10) ein erstes, schnell abbrennendes Pyrotechnik-Mittel (51) und ein zweites, im Vergleich zum ersten Pyrotechnik-Mittel (51), langsam abbrennendes Pyrotechnik-Mittel (52) befindlich ist, **dadurch gekennzeichnet dass** die zweite Berstmembran (22) unmittelbar durch in der Druckgaskammer (20) erzeugbaren Überdruck öffenbar ist und das erste Pyrotechnik-Mittel (51) von dem zweiten Pyrotechnik-Mittel (52) derart separiert ist, dass der Überdruck in der Druckgaskammer (20) zur Öffnung der zweiten Berstmembran (22) durch das erste Pyrotechnik-Mittel (51) erzeugbar ist.

2. Hybridgasgenerator (10) nach Anspruch 1,
**dadurch gekennzeichnet, dass**
das das erste Pyrotechnik-Mittel (51) und das zweite Pyrotechnik-Mittel (52) in der Druckgaskammer (20) aufgenommen sind.

3. Hybridgasgenerator (10) nach Anspruch 2,
**dadurch gekennzeichnet, dass**
das erste Pyrotechnik-Mittel (51) in einem ersten anzündernahen Abschnitt (41) eines zentralen Leitrohres (40) befindlich ist, wobei das zweite Pyrotechnik-Mittel (52) in einer zwischen einer Innenseite (13) eines Druckgaskammergehäuses (11) und dem zentralen Leitrohr (40) gebildeten Zwischenkammer (60) befindlich ist.

4. Hybridgasgenerator (10) nach Anspruch 3,
**dadurch gekennzeichnet, dass**
der erste Abschnitt (41) des Leitrohrs (40) von einem Scheibenelement (42) mit mindestens einem Gasdurchlass (43) begrenzt ist und im ersten Abschnitt (41) des Leitrohrs (40) mindestens zwei radiale Ausströmöffnungen (44) ausgebildet sind, wobei insbesondere durch das Flächenverhältnis der Ausströmöffnungen (44) zum Gasdurchlass (43) das Strömungsverhalten des durch das erste Pyrotechnik-Mittel (51) entzündbaren Gases bestimmbar ist.

5. Hybridgasgenerator (10) nach Anspruch 3 oder 4,
**dadurch gekennzeichnet, dass**
die Zwischenkammer (60) entlang einer längsaxialen Richtung (L) des Hybridgasgenerators (10) mittels einer Begrenzungsscheibe (62) begrenzt ist und/oder das Leitrohr (40) in
der Nähe eines Diffusors (70) mindestens zwei Eintrittsöffnungen (49) zur Fluidverbindung der Zwischenkammer (60) mit dem Innenbereich des Leitrohrs (40) aufweist.

6. Hybridgasgenerator (10) nach einem der Ansprüche 1 bis 5,
**dadurch gekennzeichnet, dass**
das zweite Pyrotechnik-Mittel (52) axial von dem ersten Pyrotechnik-Mittel (51) separiert ist und/oder, dass das erste Pyrotechnik-Mittel (51) in einer anzündernahen Pyrotechnik-Kammer (45) und das zweite Pyrotechnik-Mittel (52) in einem als Brennkammer (55) ausgebildeten Abschnitt der Druckgaskammer (20) befindlich ist, wobei vorzugsweise die Brennkammer (55), insbesondere durch ein federndes Element (80), von der Pyrotechnik-Kammer (45) beabstandet ist.

7. Verfahren zum Betreiben eines Hybridgasgenerators (10) nach einem der Ansprüche 1 bis 6,
**gekennzeichnet durch**
die Verfahrensschritte:
a) Aktivieren einer Anzündeinheit (30) des Hybridgasgenerators (10);
b) Entzünden des ersten Pyrotechnik-Mittels (51);
c) Aufbauen eines Überdrucks in der Druckgaskammer (20);
d) Entzünden des zweiten Pyrotechnik-Mittels (52) und teilweises Erzeugen eines Treibstoffgases;
e) Öffnen des zweiten Berstelements (22) unmittelbar aufgrund des aufgebauten Überdrucks;
f) Erzeugen weiteren Treibstoffgases durch das zweite Pyrotechnik-Mittel (52);
g) Ausströmen des weiteren Treibstoffgases durch das geöffnete zweite Berstelement (22).

8. Verfahren zum Betreiben eines Hybridgasgenerators (10) nach Anspruch 7,
**dadurch gekennzeichnet, dass**
das erste Pyrotechnik-Mittel (51) als Anzündverstärker für das zweite Pyrotechnik-Mittel (52) und als Überdruck-Erzeuger wirkt, wobei der zum Öffnen des zweiten Berstelements (22) notwendige Überdruck zeitlich vor dem Erreichen der maximalen Gaserzeugungsrate des zweiten Pyrotechnik-Mittels (52) erzeugt wird.

9. Verfahren nach Anspruch 7 oder 8,
**dadurch gekennzeichnet, dass**
die maximale Gaserzeugungsrate des zweiten Pyrotechnik-Mittels (52) zeitlich nachgelagert zu Schritt e) erreicht wird, und/oder, dass ein Bersten des ersten Berstelements (21) zeitlich nachgelagert zu Schritt a) oder b) durchgeführt wird.

10. Gassackmodul mit einem Hybridgasgenerator (10) nach einem der Ansprüche 1 bis 6, einem von dem Hybridgasgenerator (10) aufblasbaren Gassack und einer Befestigungseinrichtung zur Anbringung des Gassackmoduls an einem Fahrzeug.

11. Fahrzeugsicherheitssystem, insbesondere zum Schutz einer Person, beispielsweise eines Fahrzeuginsassen oder Passanten, mit einem Hybridgasgenerator (10), einem von diesem aufblasbaren Gassack, als Teil eines Gassackmoduls, und einer elektronischen Steuereinheit, mittels der der Hybridgasgenerator (10) bei Vorliegen einer Auslösesituation aktivierbar ist, **dadurch gekennzeichnet, dass** der Hybridgasgenerator (10) nach einem der Ansprüche 1 bis 6 ausgebildet ist.

## Claims

1. A hybrid inflator (10) comprising a compressed gas chamber (20) and an igniting unit (30), wherein the compressed gas chamber (20) is closed by a first igniter-side bursting membrane (21) and a second bursting membrane (22), wherein a first, rapidly burning-off pyrotechnic agent (51) and a second pyrotechnic agent (52) burning off slowly in comparison to the first pyrotechnic agent (51) are located in the hybrid inflator (10),
**characterized in that**
the second bursting membrane (22) can be directly opened by positive pressure which can be generated in the compressed gas chamber (20) and the first pyrotechnic agent (51) is separated from the second pyrotechnic agent (52) in such a manner that the positive pressure in the compressed gas chamber (20) for opening the second bursting membrane (22) can be generated by the first pyrotechnic agent (51).

2. The hybrid inflator (10) according to claim 1,
**characterized in that**
the first pyrotechnic agent (51) and the second pyrotechnic agent (52) are accommodated in the compressed gas chamber (20).

3. The hybrid inflator (10) according to claim 2,
**characterized in that**
the first pyrotechnic agent (51) is located in a first portion (41) of a central guide tube (40) close to the igniter, wherein the second pyrotechnic agent (52) is located in an intermediate chamber (60) formed between the inside (13) of a compressed gas chamber housing (11) and the central guide tube (40).

4. The hybrid inflator (10) according to claim 3,
**characterized in that**
the first portion (41) of the guide tube (40) is delimited by a disk element (42) having at least one gas outlet (43) and in the first portion (41) of the guide tube (40) at least two radial discharge openings (44) are formed, wherein the flow behavior of the gas ignitable by means of the first pyrotechnic agent (51) can be determined especially by the area ratio of the discharge openings (44) to the gas outlet (43).

5. The hybrid inflator (10) according to claim 3 or 4,
**characterized in that**
the intermediate chamber (60) is delimited along a direction of the longitudinal axis (L) of the hybrid inflator (10) by means of a limiting disk (62) and/or
in the vicinity of a diffuser (70) the guide tube (40) includes at least two inlet openings (49) for fluid communication of the intermediate chamber (60) with the inner portion of the guide tube (40).

6. The hybrid inflator (10) according to any one of the claims 1 to 5,
**characterized in that**
the second pyrotechnic agent (52) is separated axially from the first pyrotechnic agent (51) and/or that the first pyrotechnic agent (51) is located in a pyrotechnic chamber (45) close to the igniter and the second pyrotechnic means (52) is located in a portion of the compressed gas chamber (20) in the form of a combustion chamber (55), wherein preferably the combustion chamber (55) is spaced, especially by means of a resilient element (80), apart from the pyrotechnic chamber (45).

7. A method for operating a hybrid inflator (10) according to any one of the claims 1 to 6,
**characterized by**
the method steps of:
a) activating an igniting unit (30) of the hybrid inflator (10);
b) igniting the first pyrotechnic agent (51);
c) building up positive pressure in the compressed gas chamber (20);
d) igniting the second pyrotechnic agent (52) and partially generating propelling gas;
e) opening the second bursting element (22) directly due to the built-up pressure;
f) generating further propelling gas by means of the second pyrotechnic agent (52);
g) discharging the further propelling gas through the opened second bursting element (22).

8. The method for operating a hybrid inflator (10) according to claim 7,
**characterized in that**
the first pyrotechnic agent (51) acts as ignition booster for the second pyrotechnic agent (52) and as positive pressure generator, wherein the positive pressure required for opening the second bursting element (22) is generated prior to reaching the maximum gas generating rate of the second pyrotechnic agent (52).

9. The method according to claim 7 or 8,
**characterized in that**
the maximum gas generation rate of the second pyrotechnic agent (52) is reached subsequent to step e), and/or **in that** bursting of the first bursting element (21) is carried out subsequent to step a) or b).

10. An airbag module comprising a hybrid inflator (10) according to any one of the claims 1 to 6, an airbag inflatable by the hybrid inflator (10) and a fastening unit for attaching the airbag module to a vehicle.

11. A vehicle safety system, especially for the protection of a person, for example of a vehicle occupant or a pedestrian comprising a hybrid inflator (10), an airbag inflatable by the latter as part of an airbag module, and an electronic control unit by means of which the hybrid inflator (10) can be activated when a release situation is given, **characterized in that** the hybrid inflator (10) is configured according to any one of the claims 1 to 6.

## Revendications

1. Générateur de gaz hybride (10), comprenant un réservoir de gaz sous pression (20) et une unité d'allumage (30), pour lequel le réservoir de gaz sous pression (20) est fermée par une première membrane d'éclatement (21) côté allumeur et une seconde membrane d'éclatement (22),
**caractérisé en ce que**
dans le générateur de gaz hybride (10) se trouve une première composition pyrotechnique à combustion rapide (51) et, par rapport à la première composition pyrotechnique (51), une seconde composition pyrotechnique à combustion lente (52), pour lequel la deuxième membrane d'éclatement (22) peut être ouverte directement par une surpression qui peut être générée dans le réservoir de gaz sous pression (20) et la première composition pyrotechnique (51) est séparée de la deuxième composition pyrotechnique (52) de telle sorte que la surpression dans le réservoir de gaz sous pression (20) qui peut être générée par la première composition pyrotechnique (51) ouvre la deuxième membrane d'éclatement (22).

2. Générateur de gaz hybride (10) selon la revendication 1,
**caractérisé en ce que**
la première composition pyrotechnique (51) et la seconde composition pyrotechnique (52) sont logées dans le réservoir de gaz sous pression (20).

3. Générateur de gaz hybride (10) selon la revendication 2,
**caractérisé en ce que**
la première composition pyrotechnique (51) est située dans une première section (41) à proximité de l'allumeur d'un tube de guidage central (40), pour lequel la seconde composition pyrotechnique (52) est situé entre un côté intérieur (13) d'un corps de réservoir de gaz sous pression (11) et le tube de guidage central (40) formé dans la chambre intermédiaire (60).

4. Générateur de gaz hybride (10) selon la revendication 3,
**caractérisé en ce que**
la première section (41) du tube de guidage (40) est délimitée par un élément en forme de disque (42) avec au moins un passage de gaz (43) et au moins deux ouvertures radiales d'écoulement (44) sont formées dans la première section (41) du tube de guidage (40), pour lequel en particulier le comportement d'écoulement du gaz qui peut être allumé par la première composition pyrotechnique (51) peut être déterminé par le rapport de surface des ouvertures de sortie (44) au passage de gaz (43).

5. Générateur de gaz hybride (10) selon la revendication 3 ou 4,
**caractérisé en ce que**
la chambre intermédiaire (60) est délimitée selon une direction axiale longitudinale (L) du générateur de gaz hybride (10) au moyen d'un disque de limitation (62)
et/ou le tube de guidage (40)
au voisinage d'un diffuseur (70) comporte au moins deux ouvertures d'entrée (49) pour le raccordement fluidique de la chambre intermédiaire (60) avec la partie intérieure du tube de guidage (40).

6. Générateur de gaz hybride (10) selon l'une des revendications 1 à 5,
**caractérisé en ce que**
la deuxième composition pyrotechnique (52) est axialement séparée de la première composition pyrotechnique (51) et/ou, que la première composition pyrotechnique (51) se trouve dans une chambre pyrotechnique (45) proche du de l'allumeur et la deuxième composition pyrotechnique (52) se trouve dans une partie du réservoir de gaz sous pression (20) conçue comme chambre de combustion (55), pour lequel la chambre de combustion (55) est de préférence espacée de la chambre pyrotechnique (45), notamment par un élément ressort (80).

7. Procédé de fonctionnement d'un générateur de gaz hybride (10) selon l'une des revendications 1 à 6,
**Caractérisé par**
les étapes de processus:
a) Activer une unité d'allumage (30) du générateur de gaz hybride (10);
b) Allumer la première composition pyrotechnique (51);
c) Créer une surpression dans le réservoir de gaz sous pression (20);
d) Allumer la deuxième composition pyrotechnique (52) et générer partiellement un gaz de combustion;
e) Ouvrir le deuxième élément d'éclatement (22) directement en raison de la surpression accumulée;
f) générer davantage de gaz de combustion par la seconde composition pyrotechnique (52);
g) le gaz de combustion supplémentaire s'écoule à travers le deuxième élément d'éclatement ouvert (22).

8. Procédé de fonctionnement d'un générateur de gaz hybride (10) selon la revendication 7,
**caractérisé en ce que**
la première composition pyrotechnique (51) agit comme un renforçateur d'allumage pour la deuxième composition pyrotechnique (52) et comme un générateur de surpression, pour lequel la surpression nécessaire pour ouvrir le deuxième élément d'éclatement (22) est générée avant que la vitesse maximale de génération de gaz de la deuxième composition pyrotechnique (52).

9. Procédé selon la revendication 7 ou 8,
**caractérisé en ce que**
la vitesse maximale de génération de gaz de la seconde composition pyrotechnique (52) est atteinte après l'étape e), et/ou qu'un éclatement du premier élément d'éclatement (21) est effectué après l'étape a) ou b).

10. Module airbag avec un générateur de gaz hybride (10) selon l'une des revendications 1 à 6, un coussin gonflable à l'aide du générateur de gaz hybride (10) et un dispositif de fixation pour la fixation du module airbag sur un véhicule.

11. Système de sécurité de véhicule, notamment pour protéger une personne, par exemple un occupant de véhicule ou des passants, avec un générateur de gaz hybride (10), un coussin gonflable qui peut être gonflé par celui-ci, en tant que partie d'un module airbag, et une unité de commande électronique au moyen de laquelle le générateur de gaz hybride (10) peut être activé par apparition d'une situation de déclenchement peut être activé, **caractérisé en ce que** le générateur de gaz hybride (10) est conçu selon l'une des revendications 1 à 6.
